# EUROPEAN PATENT APPLICATION

(11) **EP 4 722 907 A1**
(43) Date of publication of application: **08.04.2026**
(21) Application number: 24822529.4
(22) Date of filing: 27.05.2024
(51) Int. Cl.: G06F 9/455

(54) **DATA PROCESSING METHOD, APPARATUS AND COMPUTER-READABLE STORAGE MEDIUM**

(30) Priority: 14.06.2023 CN 202310705849
(71) Applicant: Huawei Technologies Co., Ltd., Shenzhen, Guangdong 518129 (CN)
(72) Inventor: XU, Xiangyi, Shenzhen, Guangdong 518129 (CN); WU, Yongzheng, Shenzhen, Guangdong 518129 (CN); WANG, Chenyu, Shenzhen, Guangdong 518129 (CN); CAI, Qishen, Shenzhen, Guangdong 518129 (CN); JIN, Yier, Shenzhen, Guangdong 518129 (CN); KOU, Zili, Shenzhen, Guangdong 518129 (CN)
(74) Representative: Maiwald GmbH
(86) International application number: PCT/CN2024/095480
(87) International publication number: WO 2024/255577

(57) **Abstract**

This application provides a data processing method and apparatus, and a computer-readable storage medium, which may be applied to a computing device. A hardware resource of the computing device is divided into an REE side and a TEE side. The TEE side includes one or more containers. The method includes the following steps: A processor of the computing device obtains to-be-processed data on the REE side; and then runs a first container on the TEE side to process the to-be-processed data, where the first container is any one of the one or more containers included on the TEE side. According to the method, a risk of a container being attacked by an attacker can be reduced, and security of the container is improved, to improve security of user data in the container.

## Description

This application claims priority to Chinese Patent Application No. 202310705849.8, filed with the China National Intellectual Property Administration on June 14, 2023, and entitled "DATA PROCESSING METHOD AND APPARATUS, AND COMPUTER-READABLE STORAGE MEDIUM", which is incorporated herein by reference in its entirety.

### TECHNICAL FIELD

This application relates to the field of virtualization technologies, and in particular, to a data processing method and apparatus, and a computer-readable storage medium.

### BACKGROUND

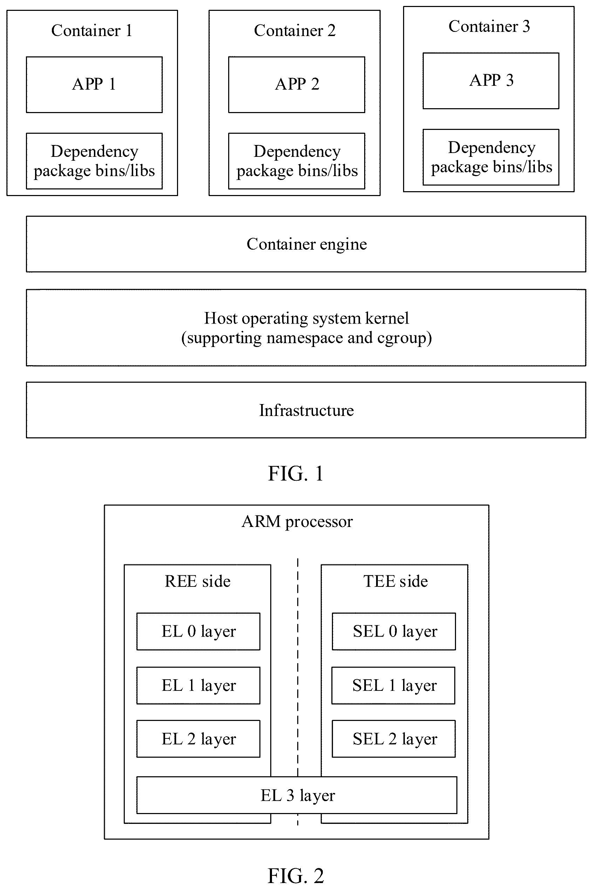

A container is a lightweight virtualization technology. The container utilizes a namespace (namespace) technology and a technology of managing processes by group (cgroup) that are supported by a linux (linux) kernel, to isolate an application (application, APP) and a dependency package (an operating environment bins/libs, which is specifically all files required for operating the APP) of the application in an independent operating environment. FIG. 1 is a diagram of an architecture of a computing device (for example, a server) running a container. An infrastructure may be hardware of the computing device. A host operating system uses the linux kernel. The namespace technology is used to implement isolation between containers, and the cgroup technology is used to implement allocation of container resources. The resources are specifically a virtualized central processing unit (virtualised central processing unit, VCPU) and a memory that are allocated to the container. A container engine (which may also be referred to as a container runtime) is similar to a virtual machine monitor (virtual machine monitor, VMM), runs on the host operating system, and is used to manage the container. Unlike a virtual machine (virtual machine, VM) with an operating system, the container has no operating system. The container is run as a process on the host operating system. Therefore, the container is started faster than the virtual machine, and is particularly suitable for a lightweight application. In addition, one host can run thousands of containers (processes) simultaneously.

However, the container is run as a process on the host operating system, and different containers share a same operating system kernel. Once the operating system kernel is cracked, isolation between the containers is damaged. In other words, once an attacker cracks the operating system kernel, the attacker can control all containers run on the operating system kernel.

Therefore, how to ensure security of the container in the computing device and prevent the attacker from stealing user data (including user data stored in the container and user data currently used by the container) in the container has become a major problem in this field.

### SUMMARY

This application provides a data processing method and apparatus, and a computer-readable storage medium, to reduce a risk of a container being attacked by an attacker, and improve security of the container, so as to improve security of user data in the container.

According to a first aspect, a data processing method is provided. The method is applied to a computing device. A hardware resource of the computing device is divided into a rich execution environment (rich execution environment, REE) side and a trusted execution environment (trusted execution environment, TEE) side. The TEE side includes one or more containers. The method includes the following steps: A processor obtains to-be-processed data on the REE side, and then runs a first container on the TEE side to process the to-be-processed data. The first container is any one of the one or more containers included on the TEE side.

In the foregoing solution, the container is located on the TEE side of the computing device, when the processor of the computing device runs a host operating system kernel on the REE side, a hardware security feature of a TEE protects the container on the TEE side, and access from the host operating system kernel on the REE side to the container is forbidden. Therefore, even if an attacker cracks the host operating system kernel on the REE side, the attacker cannot control the container run on the TEE side. This protects security of the container in the computing device, and further protects security of user data in the container.

In a possible implementation, the TEE side includes one or more VMs, and each of the one or more VMs includes at least one of the one or more containers.

In this implementation, because different VMs on the TEE side include different containers, even if the attacker cracks a container in a VM, the attacker can control only the container run in the VM, and cannot control a container run in another VM. Therefore, this can further protect the security of the container in the computing device, and improve the security of the user data.

In a possible implementation, the to-be-processed data obtained by the processor on the REE side is encrypted data. Before running the first container on the TEE side to process the to-be-processed data, the processor may obtain a decryption key that is stored on the TEE side and that is used to decrypt the encrypted data; and then decrypt the encrypted data by using the decryption key, to obtain the to-be-processed data.

In this implementation, because the to-be-processed data is in an encrypted state on the REE side, and the decryption key is stored on the TEE side, neither the host operating system kernel nor software (for example, a virtual machine monitor or a normal VM) on the REE side can obtain the decryption key stored on the TEE side. Therefore, even if the attacker cracks the host operating system kernel and the software on the REE side, and steals the encrypted data, the attacker cannot obtain a plaintext of the to-be-processed data through decryption. In this way, user data may not be stolen by the host operating system kernel and the software on the REE side, so that security of the user data can be further improved.

In a possible implementation, when determining that the first container is a secure container, the processor runs the first container on the TEE side.

Specifically, the processor may provide configuration information (for example, a type of a virtualized central processing unit core, a quantity of virtualized central processing unit cores, and a memory address) of the first container, a name of an APP installed in the first container, a hash value of an image of the first container, and the like to the user on the REE side for security measurement. In other words, the user determines whether the first container is a secure container that meets an expectation of the user or an insecure container that has a security threat. When the processor obtains feedback that the user determines that the first container is the secure container that meets the expectation of the user, the processor determines that the first container is the secure container, and runs the first container to process the user data; otherwise, the processor determines that the first container is the insecure container, and does not run the first container to process the user data.

In this implementation, the processor runs the container to process the user data only when determining that the container is secure. This can avoid processing the user data via the insecure container, so that security of the container can be improved, and security of the user data in the container can be improved.

In a possible implementation, when determining that the computing device is a secure device, the processor runs the first container on the TEE side.

Specifically, the processor may provide, on the REE side, a certificate of the computing device to the user to perform validity verification. In other words, the user determines whether the computing device is a secure device that meets an expectation of the user or a normal device that has a security threat. When the processor obtains feedback that the user determines that the computing device is the secure device that meets the expectation of the user, the processor determines that the computing device is the secure device, and runs the first container to process the user data; otherwise, the processor determines that the computing device is the normal device, and does not run the first container to process the user data.

In this implementation, the processor runs the container to process the user data only when determining that the computing device is secure. This can avoid running, via the normal computing device, the container to process the user data, so that security of the container can be improved, and security of the user data in the container can be improved.

In a possible implementation, before obtaining the to-be-processed data on the REE side, the processor may create the first container in the following manner: The processor obtains configuration information of the one or more to-be-created VMs on the REE side, and creates the one or more VMs on the TEE side based on the configuration information. Then, the processor obtains the image of the first container on the REE side, and obtains, on the REE side, an identifier of the first VM used to create the first container. Then, the processor creates the first container in the first VM on the TEE side based on the identifier of the first VM and the image of the first container. The first VM belongs to the one or more VMs.

In the foregoing implementations, the VM is created on the TEE side, and the container is created in the VM on the TEE side, so that VM-level container isolation can be implemented.

In a possible implementation, the method provided in the first aspect or any possible implementation of the first aspect further includes the following steps: The processor obtains a first management command for a life cycle of the first container on the REE side, and the processor performs, on the first container on the TEE side based on the first management command, one or any combination of the following operations: starting the first container, stopping the first container, removing the first container, migrating the first container, viewing the image of the first container, and removing the image of the first container.

In this implementation, the life cycle of the container on the TEE side can be managed.

In a possible implementation, the method provided in the first aspect or any possible implementation of the first aspect further includes the following steps: The processor obtains a second management command for the first container on the REE side; and the processor performs, on the first container on the TEE side based on the second management command, one or any combination of the following operations: installing an application, starting the application, closing the application, upgrading the application, uninstalling the application, and migrating the application.

In this implementation, the application in the container on the TEE side can be managed.

In a possible implementation, a container runtime and a first virtual machine monitor are deployed on the REE side, a second virtual machine monitor is deployed on the TEE side, a container agent module is deployed in the VM to which the first container belongs, the processor runs the container runtime and the first virtual machine monitor to collaboratively perform an operation performed by the processor on the REE side, and the processor runs the second virtual machine monitor and the container agent module to collaboratively perform an operation performed by the processor on the TEE side.

In a possible implementation, the VM to which the first container belongs includes a virtualized input/output (virtualised input/output, VirtIO) front-end driver, the first virtual machine monitor includes a VirtIO back-end driver, and the method provided in the first aspect or any possible implementation of the first aspect further includes the following steps: The processor runs the VirtIO front-end driver and the VirtIO back-end driver to collaboratively simulate a virtualized I/O device for use by the first container.

In this implementation, the first container can perform I/O communication by using the virtualized I/O device.

In a possible implementation, the TEE side includes a first memory used for data transmission between the VirtIO front-end driver and the VirtIO back-end driver, the REE side includes a second memory, a memory synchronization module is deployed on the second virtual machine monitor, and the memory synchronization module includes a mapping relationship between the first memory and the second memory. The method provided in the first aspect or any possible implementation of the first aspect further includes the following steps: The processor runs the memory synchronization module, to synchronize first data in the first memory to the second memory based on the mapping relationship between the first memory and the second memory, where the first data is data that needs to be sent by the VirtIO front-end driver to the VirtIO back-end driver; or the processor runs the memory synchronization module, to synchronize second data in the second memory to the first memory based on the mapping relationship between the first memory and the second memory, where the second data is data that needs to be received by the VirtIO front-end driver from the VirtIO back-end driver.

In this implementation, the first container can perform a read/write operation on the VirtIO back-end driver, to meet a read/write requirement of the first container.

According to a second aspect, a data processing apparatus is provided. The apparatus may be used in a computing device. A hardware resource of the computing device is divided into an REE side and a TEE side. The TEE side includes one or more containers. The apparatus includes:
an obtaining module, configured to obtain to-be-processed data on the REE side; and
a processing module, configured to run a first container on the TEE side to process the to-be-processed data, where the first container is any one of the one or more containers included on the TEE side.

In a possible implementation, the TEE side includes one or more VMs, and each of the one or more VMs includes at least one of the one or more containers.

In a possible implementation, the to-be-processed data obtained by the obtaining module on the REE side is encrypted data; and before running the first container on the TEE side to process the to-be-processed data, the processing module is further configured to: obtain, on the TEE side, a decryption key stored on the TEE side, and then decrypt the encrypted data by using the decryption key, to obtain the to-be-processed data.

In a possible implementation, the processing module is specifically configured to: when determining that the first container is a secure container, run the first container on the TEE side.

In a possible implementation, the processing module is specifically configured to: when determining that the computing device is a secure device, run the first container on the TEE side.

In a possible implementation, the obtaining module is further configured to obtain configuration information of the one or more to-be-created VMs on the REE side. The processing module is further configured to create the one or more VMs on the TEE side based on the configuration information. The obtaining module is further configured to: obtain an image of the first container on the REE side, and obtain an identifier of a first VM used to create the first container on the REE side. Then, the processing module is further configured to create the first container in the first VM on the TEE side based on the identifier of the first VM and the image of the first container. The first VM belongs to the one or more VMs.

In a possible implementation, the obtaining module is configured to obtain a first management command for a life cycle of the first container on the REE side, and the processing module is configured to perform, on the first container on the TEE side based on the first management command, one or any combination of the following operations: starting the first container, stopping the first container, removing the first container, migrating the first container, viewing the image of the first container, and removing the image of the first container.

In a possible implementation, the obtaining module is configured to obtain a second management command for the first container on the REE side. The processing module is configured to perform, on the first container on the TEE side based on the second management command, one or any combination of the following operations: installing an APP, starting the APP, stopping the APP, upgrading the APP, uninstalling the APP, and migrating the APP.

In a possible implementation, a container runtime and a first virtual machine monitor are deployed on the REE side, a second virtual machine monitor is deployed on the TEE side, a container agent module is deployed in the VM to which the first container belongs, the processor runs the container runtime and the first virtual machine monitor to collaboratively perform an operation performed by the processor on the REE side, and the processor runs the second virtual machine monitor and the container agent module to collaboratively perform an operation performed by the processor on the TEE side.

In a possible embodiment, the processing module is further configured to simulate a virtualized I/O device for use by the first container.

In a possible implementation, the processing module is further configured to: synchronize first data in a first memory to a second memory based on a mapping relationship between the first memory and the second memory, where the first data is data that needs to be sent by a VirtIO front-end driver to a VirtIO back-end driver; or synchronize second data in the second memory to the first memory based on the mapping relationship between the first memory and the second memory, where the second data is data that needs to be received by the VirtIO front-end driver from the VirtIO back-end driver. The first memory is a memory that is included on the TEE side and that is used for data transmission between the VirtIO front-end driver and the VirtIO back-end driver, the second memory is a memory on the REE side, the VirtIO front-end driver is deployed on the virtual machine to which the first container belongs, and the VirtIO back-end driver is deployed on a first virtual machine monitor on the REE side.

For related beneficial effects and descriptions of the data processing apparatus provided in the second aspect and any implementation of the second aspect, refer to the related beneficial effects and descriptions of the first aspect and any implementation of the first aspect. Details are not described herein again.

According to a third aspect, a computing device is provided. The computing device includes a processor and a storage, and the processor is configured to execute instructions stored in the storage, so that the computing device implements the method provided in the first aspect or any possible implementation of the first aspect.

According to a fourth aspect, a computer-readable storage medium is provided. The computer-readable storage medium stores instructions, and the instructions are used to implement the method provided in the first aspect or any possible implementation of the first aspect.

According to a fifth aspect, a computer program product is provided. The computer program product includes a computer program. When the computer program is read and executed by a computing device, the computing device is enabled to perform the method provided in the first aspect or any possible implementation of the first aspect.

### BRIEF DESCRIPTION OF DRAWINGS

FIG. 1 is a diagram of an architecture of a computing device running a container according to an embodiment of this application;
FIG. 2 is a diagram of a hardware architecture of an ARM processor according to an embodiment of this application;
FIG. 3 is a diagram of a structure of a computing device according to an embodiment of this application;
FIG. 4 is a schematic flowchart of a data processing method according to an embodiment of this application;
FIG. 5 is a diagram of another structure of a computing device according to an embodiment of this application;
FIG. 6 is a schematic flowchart of starting a trusted container by a computing device according to an embodiment of this application;
FIG. 7 is a diagram of another structure of a computing device according to an embodiment of this application;
FIG. 8 is a schematic flowchart of implementing I/O communication of a trusted container by a computing device according to an embodiment of this application;
FIG. 9 is a diagram of an example of a structure of a data processing apparatus according to an embodiment of this application; and
FIG. 10 is a diagram of another structure of a computing device according to an embodiment of this application.

### DESCRIPTION OF EMBODIMENTS

The following describes technical solutions of this application with reference to the accompanying drawings.

To make the technical solutions provided in this application clearer, related terms are first explained.
(1) An I/O device refers to hardware that can perform data transmission with a computing device. Most common I/O devices include a keyboard, a mouse, a block device (for example, a disk), and a network device (for example, a network interface card or a modem).
(2) A VirtIO may be understood as a set of general I/O device virtualization programs. Specifically, the VirtIO includes a front-end driver (front-end driver) and a back-end driver (back-end driver). The front-end driver and the back-end driver may cooperate to simulate a series of virtualized I/O devices, for example, VirtIO-BLK and VirtIO-NET. The VirtIO-BLK is a virtualized storage device. Actually, the VirtIO-BLK is a virtualization program for creating a disk (the disk is an I/O device). The virtualized disk may be created by utilizing the VirtIO-BLK. The VirtIO-NET is a virtualized network device. Similarly, the VirtIO-NET is a virtualization program for creating a network device. The virtualized network device (for example, a virtualized network interface controller (virtualised network interface controller, namely, VNIC)) may be created by utilizing the VirtIO-NET.
(3) A normal VM is a VM included on an REE side.
(4) A trusted VM is a VM included on a TEE side, and may also be referred to as a confidential VM.
(5) A normal container is a container included on an REE side.
(6) A trusted container is a container included on a TEE side, and may also be referred to as a confidential container.
(7) A container runtime (container runtime) may also be referred to as a container engine, and is a program that creates and runs a container based on an obtained container image, for example, a container orchestration engine (Kubernetes, k8s for short), a container daemon (containerd), or an application container engine (docker). The container runtime can manage a life cycle of the container (including creating/starting/stopping/removing the container) and a life cycle of the container image (including pulling/viewing/removing the container image).
(8) A container image is a special file system. In addition to providing files such as a program, a library, a resource, and a configuration that are required by a container at runtime, the container image further includes some configuration parameters (for example, an anonymous volume, an environment variable, and a user) prepared for the runtime. A relationship between a container image and a container is similar to a relationship between a class and an instance in object-oriented programming. The container image is a static definition, and the container is an entity of the container image at runtime.

As shown in FIG. 1, the container is run as a process on a host operating system, and different containers share a same operating system kernel. Once the operating system kernel is cracked, isolation between the containers will be damaged. In other words, once an attacker cracks the operating system kernel, the attacker can control all containers run on the operating system kernel and steal user data in the containers.

Therefore, how to ensure security of a container in a computing device and prevent an attacker from stealing user data in the container has become an urgent problem that needs to be resolved in this field.

To resolve the foregoing problem, this application provides a computing device and a data processing method. To facilitate understanding of the computing device and the data processing method provided in this application, the following first describes a trustzone (TrustZone) technology in this application.

With continuous improvement of performance of an advanced reduced instruction set computing machine (advanced RISC machine, ARM) processor, a computing device (like a server or an intelligent terminal device) running the ARM processor brings great convenience to people's life. In addition, the computing device includes an increasing amount of user data, and users pay more attention to security of the computing device. On the ARM processor, a current mainstream system-level solution is a trustzone (TrustZone) technology.

As a security extension, the TrustZone technology is first introduced in an ARMv6 version, and divides a hardware resource of the computing device into two worlds: an REE side (which may also be referred to as a normal world (normal world)) and a TEE side (which may also be referred to as a secure world (secure world)). As a hardware security feature, the TrustZone works on the TEE side.

On the REE side, it does not mean that an operating system (operating system, OS) or software running on the REE side is malicious, but that security of an environment in which the REE side is located is lower than that of the TEE side. When a processor operates on the REE side, access to resources (such as a register, a memory, a cache (cache), and a peripheral) on the TEE side is forbidden. Once the processor attempts to access these resources, a system may directly crash. For example, the TrustZone is used to set a sensitive memory as a secure memory (secure memory) by configuring a trustzone address space controller (trustzone address space controller, TZASC) register and a trustzone memory adapter (trustzone memory adapter, TZMA) register. In this way, the REE side cannot access the memory. When the processor operates on the TEE side, the processor can access both a resource on the TEE side and a resource on the REE side. Because the TEE side has a higher permission than an operating system on the REE side, the TrustZone may be used as a root of trust to provide a higher-level security protection solution to the operating system on the REE side.

The ARMv8.4 is used as an example. FIG. 2 shows an ARM hardware architecture. A left side is an architecture of an REE side, and a right side is an architecture of a TEE side. The REE side includes four work permission levels: an exception level 0 (exception level 0, EL 0) layer, an EL 1 layer, an EL 2 layer, and an EL 3 layer. The TEE side also includes four layers: a secure exception level 0 (secure exception level 0, SEL 0) layer, an SEL 1 layer, an SEL 2 layer, and an EL 3 layer. The EL 0 layer may also be referred to as a user mode layer, the EL 1 layer may also be referred to as a kernel mode layer, the EL 2 layer may also be referred to as a hypervisor (hypervisor) layer, and the EL 3 layer may also be referred to as a monitor layer. A higher value indicates a higher permission, and a lower value indicates a lower permission.

An operating system closely related to a user runs at the EL 0 layer on the REE side. For example, an operating system of a virtual machine runs at the EL 0 layer. A host operating system runs at the EL 1 layer. A virtual machine monitor runs at the EL 2 layer. ARM trusted firmware runs at the EL 3 layer. The ARM trusted firmware (ARM trusted firmware, ATF) is a 1^{st} component that runs when a processor is started. The ARM trusted firmware may provide many services, for example, platform initialization, installation of a trusted operating system, and routing of a command at the EL3 layer.

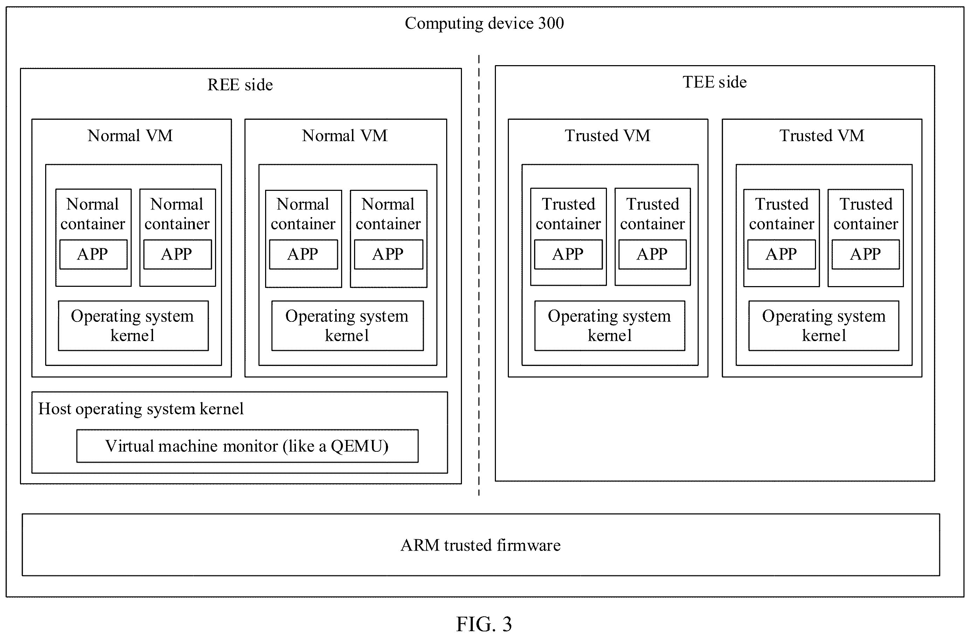

The following continues to describe the computing device provided in this application. The computing device provided in this application is mainly a computing device running the ARM processor. FIG. 3 is a diagram of a computing device 300 according to an embodiment of this application. As shown in FIG. 3, a hardware resource of the computing device 300 is divided into an REE side and a TEE side, and a host operating system kernel (which may also be referred to as a host kernel for short) is located on the REE side. A virtual machine monitor (which may also be referred to as a virtual machine monitor on the REE side, for example, a QEMU) in the host operating system kernel is configured to manage a normal VM on the REE side, for example, create, start, or remove the normal VM.

The TEE side includes one or more trusted VMs. In FIG. 3, an example in which the TEE side includes two trusted VMs is used. The REE side may include one or more normal VMs. In FIG. 3, an example in which the REE side includes two normal VMs is used.

The trusted VM is similar to the normal VM, and includes an operating system kernel and one or more trusted containers. Each trusted container includes an APP. In FIG. 3, an example in which each VM includes two trusted containers is used. It may be understood that each trusted VM may be considered as a Pod. The Pod is a minimum unit created or deployed by Kubernetes. One Pod encapsulates one or more containers (containers), storage resources (volumes), an independent network IP, and policy settings for managing and controlling running of a container.

The operating system kernel in the trusted VM may be a powerful general kernel like linux. In other words, the operating system in the trusted VM may be a powerful general operating system like linux. The trusted container may be created by using a powerful general container image like a linux image, or a general container image of another type. This is not specifically limited in this application. It may be understood that when the trusted container is created by using the linux image, the APP in the trusted container may be migrated from a conventional linux container.

In a specific implementation, the trusted VM and the normal VM each may include one or more containers. In FIG. 3, an example in which each VM includes one container is used.

It should be understood that the computing device 300 is merely an example provided in embodiments of this application, and the computing device 300 may have more or fewer components than those shown in FIG. 3, or may have different component configurations.

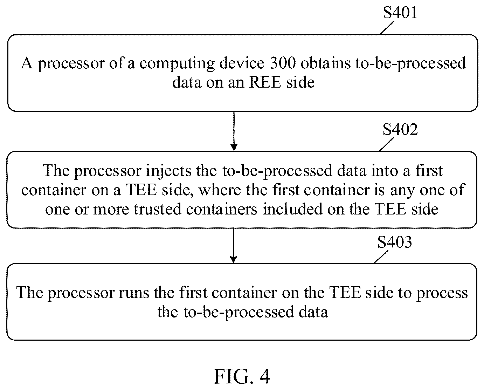

With reference to a flowchart of a data processing method according to an embodiment of this application shown in FIG. 4, the following describes in detail a process in which the computing device 300 shown in FIG. 3 processes a user service.

As shown in FIG. 4, the method includes the following steps:
S401: A processor of the computing device 300 obtains to-be-processed data on an REE side.
S402: The processor injects the to-be-processed data into a first container on a TEE side, where the first container is any one of one or more trusted containers included on the TEE side.
S403: The processor runs the first container on the TEE side to process the to-be-processed data.

The to-be-processed data may be a face image on which facial recognition is to be performed, a speech signal on which speech recognition is to be performed, text data on which text recognition is to be performed, or the like, may be a to-be-trained model and training data, or may be data that is to be encrypted for storage. The to-be-processed data is not specifically limited in this application.

The to-be-processed data may be input by a user to the computing device 300 through an interface provided by the computing device 300. After obtaining the to-be-processed data input by the user, the computing device 300 stores the to-be-processed data in a memory on the REE side. Subsequently, the processor reads the to-be-processed data from the memory on the REE side, and runs the first container for processing.

In this embodiment, when the to-be-processed data is the face image on which facial recognition is to be performed/the speech signal on which speech recognition is to be performed/ the text data on which text recognition is to be performed, the recognition result may be provided to the user on the REE side after the processor runs, on the TEE side, the first container to recognize the face image/the speech signal/the text data to obtain a corresponding recognition result. When the to-be-processed data is the to-be-trained model and the training data, the processor may provide the trained model to the user on the REE side after running, on the TEE side, the first container to train the model by using the training data, to obtain a trained model,. In other words, a trusted container on the TEE side communicates with an external network of the computing device 300 via the REE side. It may be understood that, in this way, a risk of the trusted container being attacked by an attacker in the external network can be reduced, and security of the trusted container can be improved.

When the to-be-processed data is data that is to be encrypted for storage, the processor only needs to run the first container on the TEE side to encrypt the data and then store the encrypted data at a corresponding location.

In a possible embodiment, in S401, the to-be-processed data obtained by the processor on the REE side is the encrypted data. Before the processor performs S402, the processor obtains, on the TEE side, a decryption key that is stored on the TEE side and that is used to decrypt the encrypted data, and then decrypts the encrypted data by using the decryption key, to obtain a plaintext of the to-be-processed data. Then, the processor injects the plaintext of the to-be-processed data into the first container on the TEE side for processing. In other words, the to-be-processed data exists in an encrypted state on the REE side, and the decryption key is stored on the TEE side. A host operating system kernel and software (for example, a QEMU and a normal VM) on the REE side cannot obtain the decryption key stored on the TEE side. Therefore, even if the attacker cracks the host operating system kernel and the software on the REE side and steals the encrypted data, the attacker cannot obtain the plaintext of the to-be-processed data through decryption. In this way, user data may not be stolen by the host operating system kernel and the software on the REE side, so that security of the user data can be further improved.

It may be understood that before the computing device 300 performs the data processing method shown in FIG. 4, one or more trusted VMs need to be created on the TEE side, and a trusted container needs to be created in each of the one or more trusted VMs. In this application, after creating the one or more trusted VMs and the trusted container on the TEE side, the computing device 300 may further manage the one or more trusted VMs and the trusted container. The following describes the foregoing process in detail.
(1) The computing device 300 creates the trusted VM on the TEE side.
   The processor of the computing device 300 obtains configuration information of the to-be-created trusted VM on the REE side, and then creates the trusted VM on the TEE side based on the configuration information of the trusted VM. The configuration information includes a specification of the to-be-created trusted VM, for example, a size of a storage, a type of the storage, a size of a memory, a type of the memory, a type of a processor core, a quantity of processor cores, a computing speed of the processor core, a quantity of cores of the processor core, network bandwidth, an operating system kernel, and a file system (file system). When creating the trusted VM, the processor may provide, to the trusted VM based on the configuration information, a virtual hardware resource that matches the configuration information. For example, a secure memory that matches memory information and is for use by the trusted VM is divided from a memory resource on the TEE side based on the memory information included in the configuration information, a virtualized central processing unit core that matches processor core information and is for use by the trusted VM is simulated based on the processor core information included in the configuration information, and the operating system kernel and the file system that are included in the configuration information are loaded to the secure memory corresponding to the trusted VM, to create the trusted VM.
(2) The computing device 300 creates the trusted container in the trusted VM on the TEE side.

The processor of the computing device 300 obtains an image of the to-be-created first container on the REE side, and obtains an identifier of a first VM used to create the first container. Then, the processor locates the first VM in one or more trusted VMs included on the TEE side based on the identifier of the first VM, loads the image of the first container into a memory that is divided in a memory of the first VM and that is for use by the first container, and finally creates the first container by using the image of the first container in the memory.

The image of the first container may be a container image of any type, for example, a linux image. This is not specifically limited in this application.

(3) The computing device 300 manages the trusted container.

① The computing device 300 manages a life cycle of the trusted container.

The processor of the computing device 300 may obtain a first management command for the life cycle of the trusted container on the REE side, and then perform, on the trusted container on the TEE side based on the first management command, one or any combination of the following operations: starting the trusted container, stopping the trusted container, removing the trusted container, migrating the trusted container, viewing an image of the trusted container, and removing the image of the trusted container.

② The computing device 300 manages an APP in the trusted container.

The processor of the computing device 300 may obtain a second management command for the trusted container on the REE side, and then perform, on the trusted container on the TEE side based on the second management command, one or any combination of the following operations: installing an APP, starting the APP, stopping the APP, upgrading the APP, uninstalling the APP, and migrating the APP.

③ Before running the trusted container, the computing device 300 verifies security of the trusted container, and verifies security of the computing device 300.

In a possible embodiment, the processor may provide configuration information (for example, a type of a virtualized central processing unit core, a quantity of virtualized central processing unit cores, and a memory address) of the trusted container, a name of the APP installed in the trusted container, a hash value of the image of the trusted container, and the like to the user on the REE side for security measurement. In other words, the user determines whether the trusted container is a secure container that meets an expectation of the user or an insecure container that has a security threat. When the processor obtains feedback that the user determines that the trusted container is the secure container that meets the expectation of the user, the processor determines that the trusted container is the secure container, and runs the trusted container to process user data; otherwise, the processor determines that the trusted container is the insecure container, and does not run the trusted container to process user data. Optionally, the processor may alternatively verify the security of the trusted container in another manner. This is not specifically limited in this application.

In a possible embodiment, the processor may provide, on the REE side, a certificate of the computing device 300 to the user to perform validity verification. In other words, the user determines whether the computing device 300 is a secure device that meets an expectation of the user or a normal device that has a security threat. When the processor obtains feedback that the user determines that the computing device 300 is the secure device that meets the expectation of the user, the processor determines that the computing device 300 is the secure device, and runs the trusted container to process the user data; otherwise, the processor determines that the computing device 300 is the normal device, and does not run the trusted container to process the user data. Optionally, the processor may alternatively verify the security of the computing device 300 in another manner. This is not specifically limited in this application.

Optionally, if the processor detects, in a process of running the trusted container, that the configuration information of the trusted container, the name of the APP installed in the trusted container, the hash value of the image of the trusted container, and the like are changed, the processor may re-determine security of a changed trusted container. If the processor determines that the changed trusted container is secure, the processor runs the changed trusted container. Otherwise, the processor refuses to run the changed trusted container.

Optionally, if the processor detects, in a process of running the trusted container, that the certificate of the computing device 300 expires or detects that the computing device 300 has a security risk, the processor may remind the user on the REE side that the certificate of the computing device 300 has expired or remind the user that the computing device 300 has a security risk, so that the user determines whether to continue to use the computing device 300 to run the trusted container.

It may be understood that the trusted container is run after the security of the trusted container and the security of the computing device 300 are verified, and the security of the trusted container and the security of the computing device 300 are continuously monitored in the process of running the trusted container. This can improve the security of the trusted container, to improve security of user data stored or used in the trusted container.

(4) The computing device 300 simulates a virtualized I/O device for use by the trusted container.

Before running the trusted container, the processor of the computing device 300 may further simulate the virtualized I/O device for use by the trusted container, for example, a virtualized disk or a VNIC, so that the computing device 300 can implement I/O communication of the trusted container by using a VirtIO technology. It should be understood that the virtualized I/O device may further include another device. This is not specifically limited in this application.

⑤ The computing device 300 manages communication between the trusted container and the external network of the computing device 300.

The processor of the computing device 300 may forward, to the trusted container on the TEE side, data that is related to the trusted container and that is obtained from the external network of the computing device 300 on the REE side, or may provide, to the external network of the computing device 300 on the REE side, data sent by the trusted container to the external network of the computing device 300.

It should be noted that, in addition to the foregoing operations, the processor of the computing device 300 may further perform another operation, for example, creating, modifying, or destroying a level-2 page table on the REE side and/or the TEE side. An operation that can be performed by the processor of the computing device 300 is not specifically limited in this application.

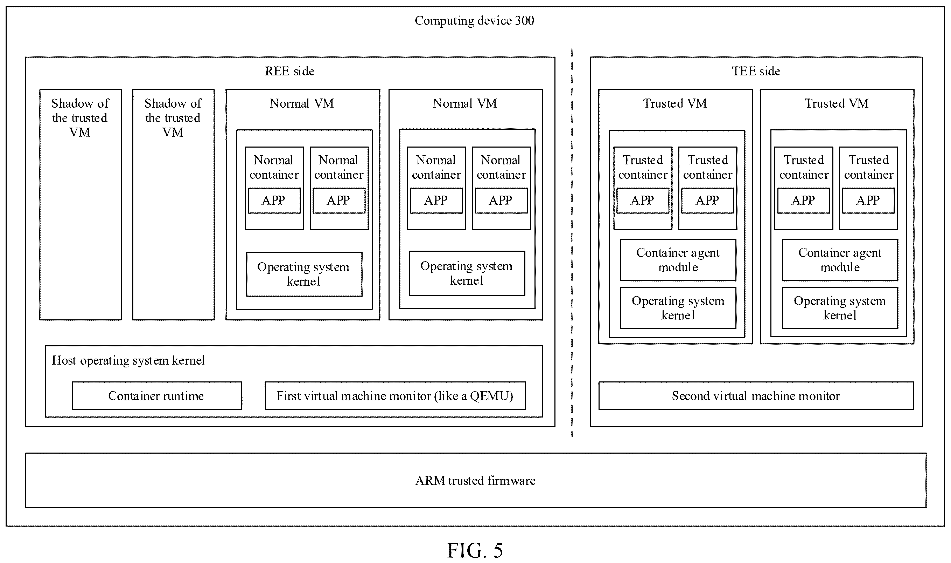

In a possible embodiment, in addition to the trusted VM, the TEE side of the computing device 300 may further include a virtual machine monitor that manages the trusted VM. As shown in FIG. 5, to distinguish, from the virtual machine monitor that is on the REE side and that is used to manage the normal VM on the REE side, the virtual machine monitor that is on the TEE side and that is used to manage the trusted VM, in the following embodiments, the virtual machine monitor that is on the REE side and that is used to manage the normal VM on the REE side is referred to as a first virtual machine monitor, and the virtual machine monitor that is on the TEE side and that is used to manage the trusted VM on the TEE side is referred to as a second virtual machine monitor. Specifically, the second virtual machine monitor runs at the SEL 2 layer on the TEE side.

In FIG. 5, the host operating system kernel on the REE side of the computing device 300 further includes a container runtime. A container agent (agent) module is further deployed in each trusted VM. The container agent module is configured to: act as an agent for a trusted container in the trusted VM to which the container agent module belongs, for example, create the trusted container, start the trusted container, forward data from the trusted container to another device/component, or forward data from another device/component to the trusted container.

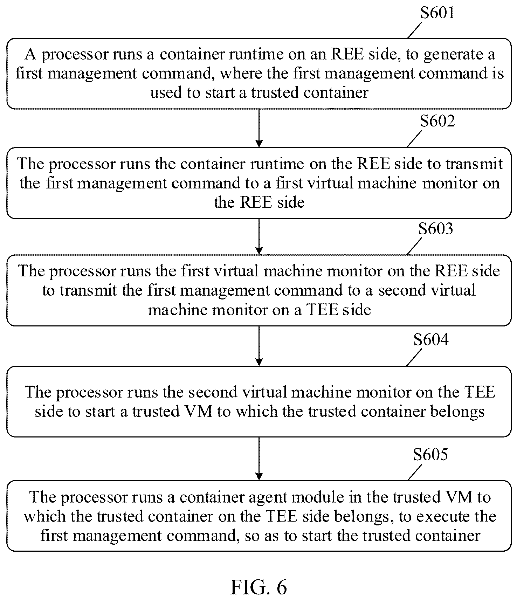

In the computing device 300 shown in FIG. 5, the processor may run the container and the first virtual machine monitor on the REE side to collaboratively implement the foregoing operations performed by the processor of the computing device 300 on the REE side, and the processor may run the second virtual machine monitor and the container agent module on the TEE side to collaboratively implement the foregoing operations performed by the processor of the computing device 300 on the TEE side. For example, the processor of the computing device 300 starts the trusted container. Refer to a flowchart shown in FIG. 6. The procedure may include the following steps.

S601: A processor runs a container runtime on an REE side, to generate a first management command, where the first management command is used to start a trusted container.

The container runtime may be k8s, containerd, docker, or the like.

A specific process in which the processor runs the container runtime on the REE side, to generate the first management command may be as follows: The processor runs a shim (shim) process in the container runtime on the REE side to generate the first management command. The shim process is a component of the container runtime, and is mainly used to separate the container runtime from a container process. The container runtime invokes a wrapper function of a running (runc) tool by using the shim process, to start the trusted container, that is, generate the first management command.

The shim process allows the runc tool in the container runtime to exit after the trusted container is created and run, and serves as a parent process of the trusted container, instead of the container runtime serving as the parent process. In this way, when the trusted container is crashed, the trusted container may not be affected because the shim process is still run normally. In addition, the shim process may also collect an exit state of the trusted container, and report the exit state to the container runtime.

S602: The processor runs the container runtime on the REE side to transmit the first management command to a first virtual machine monitor on the REE side.

S603: The processor runs the first virtual machine monitor on the REE side to transmit the first management command to a second virtual machine monitor on the TEE side.

S604: The processor runs the second virtual machine monitor on the TEE side to start a trusted VM to which the trusted container belongs.

S605: The processor runs a container agent module in the trusted VM to which the trusted container on the TEE side belongs, to execute the first management command, so as to start the trusted container.

A process in which the processor of the computing device 300 manages the trusted container (for example, stopping the trusted container or removing an image of the trusted container) is similar to a process of starting the trusted container shown in FIG. 6. For brevity of the specification, details are not described herein again.

In a possible embodiment, as shown in FIG. 5, the REE side further includes a shadow (shadow) of the trusted VM. The shadow of the trusted VM may be used by the processor to store a context of the trusted VM when the processor stops running of the trusted VM but runs another program, and when the processor resumes running of the trusted VM after executing another program, the processor restores, to the trusted VM, the context of the trusted VM stored in the shadow of the trusted VM, to resume running of the trusted VM.

In a possible embodiment, the processor of the computing device 300 may simulate, by using a technology like VirtIO, a virtualized I/O device for use by the trusted container.

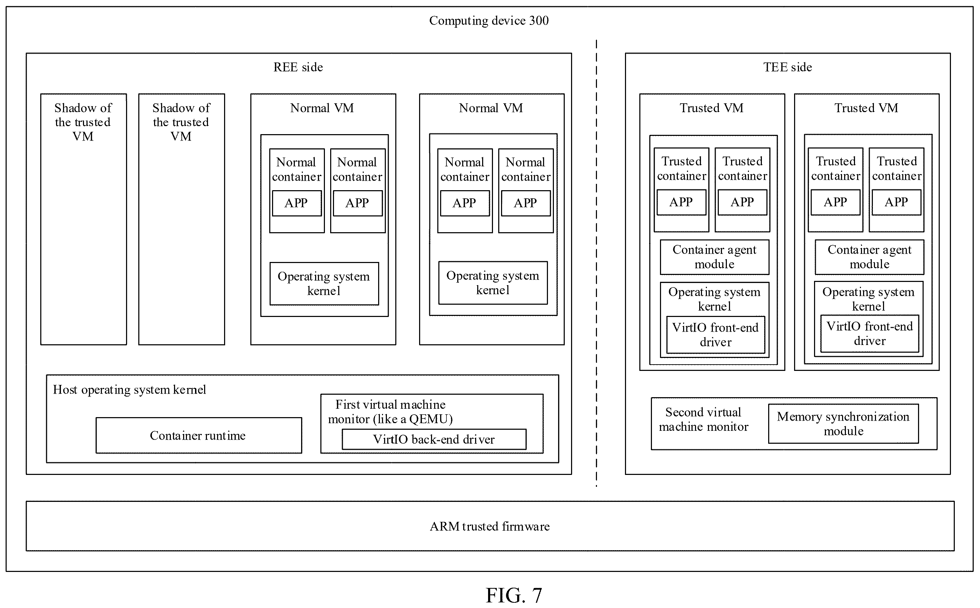

When the computing device 300 simulates, by using the VirtIO technology, the virtualized I/O device for use by the trusted container, as shown in FIG. 7, the trusted VM on the TEE side of the computing device 300 includes a VirtIO front-end driver in addition to the trusted container and the container agent module. The first virtual machine monitor includes a VirtIO back-end driver, the second virtual machine monitor includes a memory synchronization module, a memory resource on the TEE side includes a first memory (VRING) (not shown in FIG. 7) used for data transmission between the VirtIO front-end driver and the VirtIO back-end driver, and a memory resource on the REE side includes a second memory (not shown in FIG. 7) that has a mapping relationship with the first memory. The second memory may be considered as a shadow memory of the first memory, and the second memory usually has a same size as the first memory.

In the computing device 300 shown in FIG. 7, specifically, the processor of the computing device 300 may run the VirtIO back-end driver to create the virtualized I/O device, and then run the VirtIO front-end driver in the trusted VM to load the virtualized I/O device after starting the trusted VM, to implement simulation of the virtualized I/O device. In this way, the computing device 300 can implement I/O communication of the trusted container by using the VirtIO technology.

The memory synchronization module is configured to: in a process in which the computing device 300 implements an I/O communication operation of the trusted container by using the VirtIO technology, synchronize, to the second memory, data (referred to as first data below) that needs to be sent by the VirtIO front-end driver in the first memory to the VirtIO back-end driver, and synchronize, to the first memory, data (referred to as second data below) that needs to be sent by the VirtIO back-end driver in the second memory to the VirtIO front-end driver. The first data may also be understood as data that needs to be transferred by the trusted container to an external network of the computing device 300, and the second data may also be understood as data that needs to be received by the trusted container from the external network of the computing device 300.

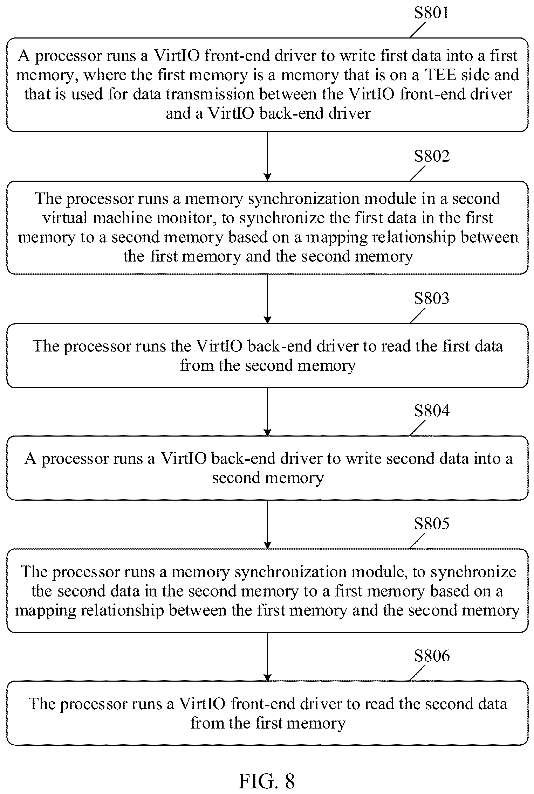

The following describes in detail a process in which the computing device 300 shown in FIG. 7 implements the I/O communication of the trusted container by using the VirtIO technology.
(1) For example, the I/O communication is a write operation. As shown in FIG. 8, this communication process specifically includes the following steps.
   S801: A processor runs a VirtIO front-end driver to write first data into a first memory, where the first memory is a memory that is on a TEE side and that is used for data transmission between the VirtIO front-end driver and a VirtIO back-end driver.
   S802: The processor runs a memory synchronization module in a second virtual machine monitor, to synchronize the first data in the first memory to a second memory based on a mapping relationship between the first memory and the second memory.
   S803: The processor runs the VirtIO back-end driver to read the first data from the second memory.
(2) For example, the I/O communication is a read operation. As shown in FIG. 8, this communication process specifically includes the following steps:
   S804: A processor runs a VirtIO back-end driver to write second data into a second memory.
   S805: The processor runs a memory synchronization module, to synchronize the second data in the second memory to a first memory based on a mapping relationship between the first memory and the second memory.
   S806: The processor runs a VirtIO front-end driver to read the second data from the first memory.

It can be learned that, in the computing device 300 and the data processing method provided in this application, the processor of the computing device 300 creates the trusted container on the TEE side, and runs the trusted container on the TEE side to process a user service. The trusted container is deployed on the TEE side, a hardware security feature of a TEE can protect the trusted container on the TEE side, and access from the host operating system kernel on the REE side to the trusted container is forbidden. Therefore, even if the attacker cracks the host operating system kernel on the REE side, the attacker cannot control the trusted container run on the TEE side. This protects security of the container in the computing device, and further protects security of user data in the container.

In addition, because different trusted VMs on the TEE side include different trusted containers, even if the attacker cracks a trusted container in a trusted VM, the attacker can control only the trusted container run in the trusted VM, and cannot control a trusted container run in another trusted VM. Therefore, this solution can further protect the security of the container in the computing device, and improve the security of the user data.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the data processing method provided in this application. Based on a same inventive concept, the following continues to describe a data processing apparatus and a computing device provided in this application.

It should be understood that units and modules in the data processing apparatus may also be divided in a plurality of manners. The modules may be software modules or may be hardware modules, or a part of the modules may be software modules and the other part of the modules may be hardware modules. This is not limited in this application.

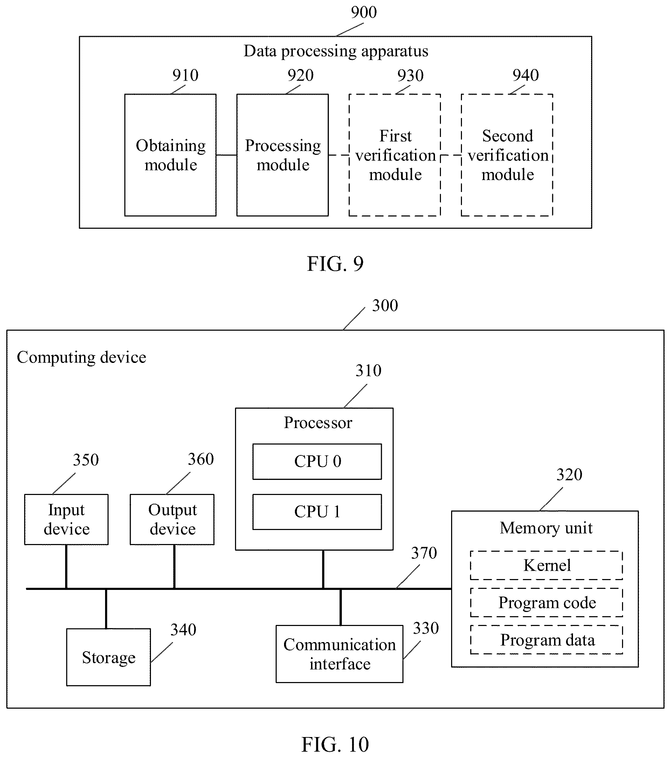

FIG. 9 is a diagram of an example of a structure of a data processing apparatus 900 according to an embodiment of this application. This may be applied to the computing device 300 that is shown in FIG. 3, FIG. 5, and FIG. 7 and whose hardware resource is divided into an REE side and a TEE side. As shown in FIG. 9, the data processing apparatus 900 includes an obtaining module 910 and a processing module 920. The following describes functions of the modules of the data processing apparatus 900 by using examples. It should be understood that the functions of the modules described in the following examples are merely functions that the data processing apparatus 900 may have in some embodiments of this application, and the functions of the modules are not limited in this application.

The obtaining module 910 is configured to obtain to-be-processed data on the REE side.

The processing module 920 is configured to run a first container on the TEE side to process the to-be-processed data, where the first container is any one of one or more containers (namely, trusted containers) included on the TEE side.

In a possible embodiment, the TEE side includes one or more VMs (namely, the foregoing trusted VMs), and each of the one or more VMs includes at least one of the one or more containers.

In a possible embodiment, the to-be-processed data obtained by the obtaining module 910 on the REE side is encrypted data; and before running the first container on the TEE side to process the to-be-processed data, the processing module 920 is further configured to: obtain, on the TEE side, a decryption key stored on the TEE side, and then decrypt the encrypted data by using the decryption key, to obtain a plaintext of the to-be-processed data.

In a possible embodiment, as shown in FIG. 9, the data processing apparatus 900 further includes a first verification module 930, configured to verify whether the first container is a secure container. The processing module 920 runs the first container on the TEE side when the first verification module 930 determines that the first container is the secure container.

In a possible embodiment, as shown in FIG. 9, the data processing apparatus 900 further includes a second verification module 940, configured to determine whether the computing device 300 to which the data processing apparatus 900 belongs is a secure device. The processing module 920 runs the first container on the TEE side when the second verification module 940 determines that the computing device 300 is the secure device.

In a possible embodiment, the obtaining module 910 is further configured to obtain configuration information of the one or more to-be-created VMs on the REE side. The processing module 920 is configured to create the one or more VMs on the TEE side based on the configuration information. The obtaining module 910 is further configured to: obtain an image of the first container on the REE side, and obtain an identifier of a first VM used to create the first container on the REE side. Then, the processing module 920 is configured to create the first container in the first VM on the TEE side based on the identifier of the first VM and the image of the first container. The first VM belongs to the one or more VMs.

In a possible embodiment, the obtaining module 910 is configured to obtain a first management command for a life cycle of the first container on the REE side, and the processing module 920 is configured to perform, on the first container on the TEE side based on the first management command, one or any combination of the following operations: starting the first container, stopping the first container, removing the first container, migrating the first container, viewing the image of the first container, and removing the image of the first container.

In a possible embodiment, the obtaining module 910 is configured to obtain a second management command for the first container on the REE side. The processing module 920 is configured to perform, on the first container on the TEE side based on the second management command, one or any combination of the following operations: installing an APP, starting the APP, stopping the APP, upgrading the APP, uninstalling the APP, and migrating the APP.

In a possible embodiment, the processing module 920 is further configured to provide a processing result for a user on the REE side, where the processing result is obtained by the processor by running the first container on the TEE side to process the to-be-processed data.

In a possible embodiment, the processing module 920 is further configured to simulate a virtualized I/O device for use by the first container. Optionally, the processing module 920 may simulate, by using a VirtIO technology, the virtualized I/O device for use by the first container.

In a possible embodiment, the processing module 920 is further configured to: synchronize first data in a first memory to a second memory based on a mapping relationship between the first memory and the second memory, where the first data is data that needs to be sent by a VirtIO front-end driver to a VirtIO back-end driver; or synchronize second data in the second memory to the first memory based on the mapping relationship between the first memory and the second memory, where the second data is data that needs to be received by the VirtIO front-end driver from the VirtIO back-end driver. The first memory is a memory that is included on the TEE side and that is used for data transmission between the VirtIO front-end driver and the VirtIO back-end driver, the second memory is a memory on the REE side, the VirtIO front-end driver is deployed on the virtual machine to which the first container belongs, and the VirtIO back-end driver is deployed on a first virtual machine monitor on the REE side.

Specifically, for specific implementations of performing various operations by the data processing apparatus 900, refer to descriptions in related content in the foregoing data processing method embodiments. For brevity of the specification, details are not described herein again.

FIG. 10 is a diagram of another structure of a computing device 300 according to an embodiment of this application. The computing device 300 includes a processor 310, a memory unit 320, a communication interface 330, a storage 340, an input device 350, and an output device 360. The processor 310, the memory unit 320, the communication interface 330, the storage 340, the input device 350, and the output device 360 may be connected to each other through a bus 370.

The processor 310 may read program code (including instructions) stored in the memory unit 320, and execute the program code stored in the memory unit 320, so that the computing device 300 performs steps in the data processing method provided in the foregoing method embodiments.

The processor 310 may have a plurality of specific implementation forms. For example, the processor 310 may be at least one central processing unit (central processing unit, CPU). As shown in FIG. 10, the processor 310 includes a CPU 0 and a CPU 1. Alternatively, the processor 310 may be a graphics processing unit (graphics processing unit, GPU). The processor 310 may alternatively be a single-core processor or a multi-core processor. The processor 310 may be a combination of a CPU and a hardware chip. Optionally, the hardware chip may be implemented by using an application-specific integrated circuit (application-specific integrated circuit, ASIC) or a programmable logic device (programmable logic device, PLD). The PLD may be implemented by a complex programmable logical device (complex programmable logical device, CPLD), a field-programmable gate array (field-programmable gate array, FPGA), generic array logic (generic array logic, GAL), or any combination thereof. The processor 310 may alternatively be implemented independently by using a logic device with built-in processing logic, for example, an FPGA or a digital signal processor (digital signal processor, DSP).

The memory unit 320 is configured to store a kernel, program code, and program data generated when the processor 310 executes the program code stored in the memory unit 320. The program code includes code of the obtaining module 910, code of the processing module 920, and the like. The program data includes to-be-processed data, an image of a trusted container, a processing result obtained by processing the to-be-processed data by the trusted container, and the like.

The communication interface 330 may be a wired interface (for example, an Ethernet interface, an optical fiber interface, or another type of interface (for example, an infiniBand (infiniBand, IB) interface)) or a wireless interface (for example, a cellular network interface or a wireless local area network interface), and is configured to communicate with another computing device or apparatus. When the communication interface 330 is a wired interface, the communication interface 330 may use a protocol suite above a transmission control protocol/internet protocol (transmission control protocol/internet protocol, TCP/IP), for example, a remote function call (remote function call, RFC) protocol, a simple object access protocol (simple object access protocol, SOAP) protocol, a simple network management protocol (simple network management protocol, SNMP), a common object request broker architecture (common object request broker architecture, CORBA) protocol, and a distributed protocol.

The storage 340 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The storage 340 may alternatively be a volatile memory. The volatile memory may be a random access memory (random access memory, RAM), used as an external cache.

The input device 350 may include a mouse, a keyboard, and the like. A user may input data or an instruction, for example, the to-be-processed data, the configuration information of the trusted VM, the first management instruction, or the second management instruction, to the computing device 300 by using the input device 350.

The output device 360 may include a display. The output device 360 may provide data to the user on the display, for example, provide the user with the result obtained by processing the to-be-processed data by the trusted VM. The display may include a cathode ray tube (cathode ray tube, CRT) display, a plasma display panel (plasma display panel, PDP), a liquid crystal display (liquid crystal display, LCD), and the like. For example, the display is an LCD. The liquid crystal display includes a liquid crystal panel and a backlight module. The liquid crystal display panel includes a polarization film, a glass substrate, a black matrix, a color filter, a protective film, a common electrode, a calibration layer, a liquid crystal layer (liquid crystal, a spacer, and a sealant), a capacitor, a display electrode, a prism layer, and a light diffusion layer. The backlight module includes an illumination light source, a reflection panel, a light guide panel, a diffusion sheet, a brightness enhancement film (prismatic lens), a frame, and the like.

The bus 370 may be a peripheral component interconnect express (peripheral component interconnect express, PCIe) bus, an extended industry standard architecture (extended industry standard architecture, EISA for short) bus, or the like. The bus 370 may be classified into an address bus, a data bus, a control bus, and the like. For ease of indication, the bus is indicated by only one bold line in FIG. 10. However, it does not indicate that there is only one bus or only one type of bus.

It should be understood that the computing device 300 according to this embodiment of this application may correspond to the computing device including the data processing apparatus 900 in embodiments of this application, and may correspond to a corresponding body that performs the methods shown in FIG. 4, FIG. 6, and FIG. 8 in embodiments of this application, and operations and/or functions of the modules in the computing device 300 are separately used to implement corresponding procedures of the methods shown in FIG. 4, FIG. 6, and FIG. 8. For brevity, details are not described herein again.

It should be understood that the computing device 300 is merely an example provided in embodiments of this application, and the computing device 300 may have more or fewer components than those shown in FIG. 10, may combine two or more components, or may have different component configurations.

This application further provides a computer-readable storage medium. The computer-readable storage medium stores instructions. When the instructions are run, some or all of the steps of the data processing method recorded in the foregoing embodiments may be implemented.

This application further provides a computer program product. When the computer program product is read and executed by a computer, some or all of the steps of the data processing method recorded in the foregoing method embodiments may be implemented.

In the foregoing embodiments, descriptions of each embodiment have respective focuses. For a part that is not described in detail in an embodiment, refer to related descriptions in other embodiments.

All or some of the foregoing embodiments may be implemented by using software, hardware, or any combination thereof. When software is used to implement embodiments, all or some of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A data processing method, applied to a computing device, wherein a hardware resource of the computing device is divided into a rich execution environment REE side and a trusted execution environment TEE side, the TEE side comprises one or more containers, and the method comprises:
obtaining, by a processor of the computing device, to-be-processed data on the REE side; and
running, by the processor, a first container on the TEE side to process the to-be-processed data, wherein the first container is any one of the one or more containers comprised on the TEE side.

2. The method according to claim 1, wherein the TEE side comprises one or more virtual machines VM, and each of the one or more VMs comprises at least one of the one or more containers.

3. The method according to claim 1 or 2, wherein
obtaining, by the processor, the to-be-processed data on the REE side comprises: obtaining, by the processor, encrypted to-be-processed data on the REE side; and
before running, by the processor, the first container on the TEE side to process the to-be-processed data, the method further comprises:
obtaining, by the processor on the TEE side, a decryption key stored on the TEE side; and
decrypting, by the processor, the encrypted to-be-processed data on the TEE side by using the decryption key, to obtain the to-be-processed data.

4. The method according to any one of claims 1 to 3, wherein running, by the processor, the first container on the TEE side comprises:
when determining that the first container is a secure container, running, by the processor, the first container on the TEE side.

5. The method according to any one of claims 1 to 4, wherein running, by the processor, the first container on the TEE side comprises:
when determining that the computing device is a secure device, running, by the processor, the first container on the TEE side.

6. The method according to any one of claims 1 to 5, wherein before obtaining, by the processor, the to-be-processed data on the REE side, the method further comprises:
obtaining, by the processor, configuration information of the one or more to-be-created VMs on the REE side;
creating, by the processor, the one or more VMs on the TEE side based on the configuration information;
obtaining, by the processor, an image of the first container on the REE side;
obtaining, by the processor on the REE side, an identifier of a first VM used to create the first container, wherein the first VM belongs to the one or more VMs; and
creating, by the processor on the TEE side, the first container in the first VM based on the identifier of the first VM and the image of the first container.

7. The method according to any one of claims 1 to 6, wherein the method further comprises:
obtaining, by the processor, a first management command for a life cycle of the first container on the REE side; and
performing, by the processor on the first container on the TEE side based on the first management command, one or any combination of the following operations: starting the first container, stopping the first container, removing the first container, migrating the first container, viewing the image of the first container, and removing the image of the first container.

8. The method according to any one of claims 1 to 7, wherein the method further comprises:
obtaining, by the processor, a second management command for the first container on the REE side; and
performing, by the processor on the first container on the TEE side based on the second management command, one or any combination of the following operations: installing an application, starting the application, closing the application, upgrading the application, uninstalling the application, and migrating the application.

9. The method according to any one of claims 1 to 8, wherein a container runtime and a first virtual machine monitor are deployed on the REE side, a second virtual machine monitor is deployed on the TEE side, a container agent module is deployed in the VM to which the first container belongs, the processor runs the container runtime and the first virtual machine monitor to collaboratively perform an operation performed by the processor on the REE side, and the processor runs the second virtual machine monitor and the container agent module to collaboratively perform an operation performed by the processor on the TEE side.

10. The method according to claim 9, wherein the VM to which the first container belongs comprises a virtualized input/output VirtIO front-end driver, the first virtual machine monitor comprises a VirtIO back-end driver, and the method further comprises:
running, by the processor, the VirtIO front-end driver and the VirtIO back-end driver to collaboratively simulate a virtualized I/O device for use by the first container.

11. The method according to claim 10, wherein the TEE side comprises a first memory used for data transmission between the VirtIO front-end driver and the VirtIO back-end driver, the REE side comprises a second memory, a memory synchronization module is deployed on the second virtual machine monitor, and the memory synchronization module comprises a mapping relationship between the first memory and the second memory; and
the method further comprises:
running, by the processor, the memory synchronization module, to synchronize first data in the first memory to the second memory based on the mapping relationship between the first memory and the second memory, wherein the first data is data that needs to be sent by the VirtIO front-end driver to the VirtIO back-end driver;
or
running, by the processor, the memory synchronization module, to synchronize second data in the second memory to the first memory based on the mapping relationship between the first memory and the second memory, wherein the second data is data that needs to be received by the VirtIO front-end driver from the VirtIO back-end driver.

12. A computing device, wherein the computing device comprises a processor and a storage, and the processor of the computing device is configured to execute instructions stored in the storage of the computing device, so that the computing device performs the method according to any one of claims 1 to 11.

13. A computer-readable storage medium, comprising computer program instructions, wherein when the computer program instructions are executed by a computing device, the computing device performs the method according to any one of claims 1 to 11.
